(19) **Europäisches Patentamt / European Patent Office / Office européen des brevets**

(11) **EP 2 188 226 B1**

(12) **EUROPEAN PATENT SPECIFICATION**

(45) Date of publication and mention
of the grant of the patent:
**30.05.2018 Bulletin 2018/22**

(21) Application number: **08784460.1**

(22) Date of filing: **14.08.2008**

(51) Int Cl.:
*C03C 17/00* (2006.01)  *C09K 13/00* (2006.01)
*C11D 3/00* (2006.01)  *C11D 3/12* (2006.01)
*C11D 7/20* (2006.01)  *C11D 11/00* (2006.01)
*C11D 17/04* (2006.01)  *C03C 23/00* (2006.01)

(86) International application number:
**PCT/DK2008/050202**

(87) International publication number:
**WO 2009/021524 (19.02.2009 Gazette 2009/08)**

(54) **METHOD AND FLUID COMPOSITIONS FOR PRODUCING OPTICALLY CLEAR PHOTOCATALYTIC COATINGS**

VERFAHREN UND FLÜSSIGEN ZUSAMMENSETZUNGEN ZUR HERSTELLUNG VON OPTISCH KLAREN PHOTOKATALYTISCHEN BESCHICHTUNGEN

PROCÉDÉ ET COMPOSITIONS FLUIDES POUR LA PRODUCTION DE REVÊTEMENTS PHOTOCATALYTIQUES OPTIQUEMENT TRANSPARENTS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.08.2007 DK 200701161**

(43) Date of publication of application:
**26.05.2010 Bulletin 2010/21**

(73) Proprietor: **Photocat A/S**
**2100 Copenhagen Ø (DK)**

(72) Inventors:
• **IVERSEN, Steen Brummerstedt**
**DK-2950 Vedbæk (DK)**
• **JENSEN, Henrik**
**3650 Ølstykke (DK)**
• **FOVERSKOV, Morten**
**DK-2765 Smørum (DK)**
• **MATEIU, Ramona**
**DK-2100 Copenhagen Ø (DK)**

(74) Representative: **Plougmann Vingtoft a/s**
**Rued Langgaards Vej 8**
**2300 Copenhagen S (DK)**

(56) References cited:
**EP-A- 0 987 317**  **EP-A- 1 479 733**
**WO-A-2004/022830**  **WO-A-2005/066286**
**WO-A-2005/105304**  **DE-A1- 10 201 596**

• **DATABASE WPI Week 200521 Thomson Scientific, London, GB; AN 2005-199664 XP002474442 -& JP 2005 048125 A (HITACHI CHEM CO LTD) 24 February 2005 (2005-02-24)**
• **PARKER J: "NEXT-GENERATION ABRASIVE PARTICLES FOR CMP" SOLID STATE TECHNOLOGY, PENNWELL CORPORATION, TULSA, OK, US, vol. 47, no. 12, December 2004 (2004-12), page 30,32, XP001212469 ISSN: 0038-111X**

## Description

The present invention relates to a method and water based compositions for treating a surface of a solid material so as to obtain a durable coating providing properties such as superhydrophilicity, photocatalytic and/or antibacterial activity properties. The photocatalytic coating provided according to the present invention may be applied as a post treatment of an existing surface.

## Background

Surfaces in general are contaminated by dust, smoke, exhaust gas, organics, bacteria, mold, ultraviolet degradation etc. Various solutions have been proposed to address such surface contamination problems.

One of the popular solutions is to apply a photocatalyst to the surface so as to make the surface self cleaning. Photocatalysis have been known for nearly three decades now. In photosynthesis, plants capture the energy from sunlight and thus grow. During this process, they produce oxygen by oxidizing water and reducing carbon dioxide. Photocatalysis may be considered as the opposite process of synthesis. Photocatalysts are a class of semiconductors capable of accelerating air oxidation of organic compounds upon exposure to light, usually in the ultraviolet range, absorbed by the photocatalyst. Titanium dioxide and particularly in its anatase form is the most widely used photocatalyst. Besides the breakdown of organics, a second light induced phenomena called superhydrophilicity occurs in parallel on such a photocatalytic surface.

A number of applications are emerging including photocatalyzed water and air treatment, self cleaning windows, tiles, roads, vehicles, sterialization of medical instruments and supplies. Of these emerging applications self cleaning windows are now being commercialized by Pilkington under the name Active™. See for example Photocatalytic Purification of water and air, D.F. Ollis and H. Al-Ekabi, eds, Heller (WO97/07069), Fujishima et al, , J. of Photochemistry and photobiology C: Reviews 1 (2000), 1-21], Hayakawa et al (US 2002/016250A1) for the present status of applications..

Though light induced catalysis or photocatalyis is well known, and a number of promising applications are emerging, current methods still suffer from certain limitations. Depending on the composition, structure and the processing, the photocatalytic surface can more or less efficient and have more photocatalytic character and less superhydrophilicity and vice versa, but usually both occurs in parallel [Fujishima et al, J. of Photochemistry and photobiology C: Reviews 1 (2000), 1-21].

Besides the photocatalytic activity and superhydrophilicity needed to obtain self cleaning properties, many applications demand a high clearness or optical transparency of said photocatacalytic coating. An example of such application is the treatment of glass surfaces such as a window. It is well known that photocatalytic coatings made from photocatcatalyst such as Degussa P25 results in a light scattering coating as the particle size is 0,1-0,3 microns in diameter [Heller, WO97/097069]. Such large particle size even in the thinnest films, produces a milky appearance.

Another critical issue is the durability of said coating. Photocatalytic nanoparticles may be physically deposited on a surface, but may not adhere sufficiently to said surface to obtain a desired durability. A durable coating may be produced from a gel of a precursor of a photocatalytically active material such as a amorphous titainia e.g. by dip coating, but such coating needs to be heated to a relatively high temperature (> 400 C) for adhesion and to obtain its final photocatlytically active structure.

Optically clear and durable photocatalytic active coatings can be made by physical vapor deposition, chemical vapor deposition or sputtering techniques, but such techniques also requires high temperatures and other excessive conditions to obtain the final structure and adhesion of said coating.

Hence, such techniques are only suitable for treatment of new surfaces, and not existing surfaces.

When considering treatment of a surface being a window pane and aiming at treating existing surfaces by a post treatment process, certain problems may arise. A window pane that has been exposed to an environment, typically and preferably being the environment outside a building, often has substances such as dirt sticking to the window pane. Often, such substances are not removable by an ordinary window polishing method to an extend where the surface of the window pane is susceptible to receive a coating with photocatalytic material. In particular, ordinary window polishing methods often leave the window pane with a surface being at least partly hydrophobic and if a coating is applied to such a surface streak, lines, colouring and other effects may occur.

An attempt has been made to deal with the issue of rendering a surface susceptible to receive a coating, see EP 1 773 729 B1, and this attempt renders the surface susceptible to receive the coating by applying a pre-coating. This process has turned out to be difficult to utilise, relatively time consuming and expensive. Importantly, the method disclosed in EP 1 773 729 resides in a sputtering technique which is considered non-applicable as a post treatment process, in particular when post treatment of window panes are considered.

EP0987317 (A1) discloses a method for forming a photocatalytically hydrophilifiable coating, involving a process for treating the surface of a substrate before the formation of a photocatalytically hydrophilifiable coating, which can form a good photocatalytically hydrophilifiable coating, and a cleaning agent and an undercoating composition for the method.

XP002474442 discloses a chemical mechanical polishing (CMP) abrasive containing water, cerium oxide particles and dispersant. The zeta-potential of the particles contained in the CMP abrasive is positive charge which is 10 mV or more. The CMP abrasive has pH value of 5-10.

JP2005048125 (A) discloses a method for providing a CMP (chemical mechanical polishing) abrasive excellent in dispersibility of cerium oxide particles; a polishing method capable of giving global flatness by polishing an uneven substrate; and a method for producing a semiconductor device having a polished surface with a high machining accuracy. The CMP abrasive contains water, cerium oxide particles, and a dispersant therefor and has a pH of 5-10.

**Summary of the invention**

The present invention is related to the treatment of a surface of a material with a composition providing a durable and optically clear coating with properties such as superhydrophilicity, photocatalytic, antimicrobial and anti-mold properties.

As indicated above, the present invention focus on and is particularly advantageous in connection with treatment of a surface being a window pane and utilising the treatment on existing surfaces of such window panes as post treatment. Thus, the present invention focus on coating a window pane that has been exposed to an environment, typically and preferably being the environment outside a building, which exposure results in substances such as dirt are sticking to the window pane. However, it is envisaged, that the invention is applicable to other surfaces as well as other uses.

Different aspects of the present invention seek to meet one or more of the following objectives:
An objective of present invention may be to provide method and fluid compositions for treating a surface of material so as to obtain a surface having photocatalytic and/or superhydrophilic and/or self cleaning and/or selfsterializing and/or antimicrobial and/or anti-mold properties.

Another objective of the present invention may be to provide a method and fluid compositions, which allow treatment at lower temperatures than the prior art and/or do not require subsequent addition of heat to obtain the final structure of said treated surface.

Still another objective of the present invention may be to provide a method and fluid compositions suitable for post treatment of existing surfaces of materials (i.e. during their service life).

A further objective of the present invention may be to provide a method and fluid compositions, which allows for a high degree of homogeneity and/or optical transparency of said coating/treatment.

A still further objective of the present invention may be to provide a method and fluid compositions which allows for durable effect.

Still another further objective of the present invention may be to provide fluid compositions suitable for use in a method according to the present invention.

A further and presently very interesting object of the present invention may be to provide a method and fluid compositions having low environmental impact and not being unhealthy.

Other potential objectives may be

- to provide improved photocatalytic materials, compositions an coatings, which are more active and efficient than the prior art e.g. absorb more light or open up for new uses e.g. indoor use
- stable suspensions for long term storage without change;
- method applicable to a number of different types surfaces.

Additionally, it may be an objective to provide a product obtained by the above described methods, and applications for use of said product.

These objectives and the advantages that will be evident from the following description are obtained by the following preferred embodiments of the invention.

In a first aspect, the present invention of relates to a method for treating the surface of a material with one or more coating compositions. More specifically the invention relates to the treatment of a material surface at low temperature such as ambient temperature i.e. 0-50 C.

Hence, a preferred embodiment of a method according to the present invention comprises treating the surface of a material by the following steps:

- cleaning and conditioning the surface of said material using one or more cleaning fluid composition/-s so as to provide a clean, pre-conditioned and preferable hydrophilic surface for said subsequent coating step
- coating such as depositing one or more coating fluid composition/-s comprising a photocatalyst in a suspended form on said clean, preconditioned surface,

wherein the treatment of said surface of said material is performed at a temperature in the range 0-50 C, and do not require further subsequent addition of heat to obtain the final structure of said treated surface.

The material being treated according to the present invention may comprise a number of materials including glass surfaces such as window panes, metals e.g. the surface of machines or processing plants, glazed tiles, mineral products such as brick walls, painted surfaces, mirrors, plastic, wood etc.

A large number of such surfaces are already in their service life, and a preferred embodiment of the present invention is the post treatment of such surfaces during their service life so as to provide them with properties such as photocatalytic activity and/or superhydrophilic properties and/or self cleaning and/or antimicrobial activity and/or antimold and/or antifogging properties.

Treatment of such surfaces requires a method wherein the final structure of said treated surface is obtained at low temperature. This is enabled by a method according to the present invention.

As indicated herein, the invention relates in particular to a method for treating the surface of a solid material, the surface being a window pane and the method being applied to existing surfaces as a post treatment, the method comprising the steps of:

- cleaning said surface using a first cleaning fluid composition, so as to provide a clean and preconditioned surface having a contact angle with water below 15°, wherein the first cleaning fluid composition comprises

    - water as a solvent
    - at least one component resulting in a chemical mechanical polishing wherein the at least one component comprises ceria ($CeO_2$) particles suspended in water,

    and wherein the pH value of said first cleaning composition is in the range of 2.0 to 6,
- coating one or more times said surface by depositing a coating fluid composition comprising a photocatalyst in a suspended form on said clean, preconditioned surface, the coating fluid composition comprises

    - photocatalytic active nanoparticles of titania ($TiO_2$), and
    - water as a solvent,

wherein the cleaning and the coating steps are performed at a temperature in the range 5-50° C.

While the invention particularly relates to post treatment of window panes, it is envisaged, that the invention are applicable to other surfaces as well as well as a treatment applied during the production of the solid having the surface.

In the present context, the term post treatment is preferably used to designate a treatment applied after the production of a solid material has come to and end. When window panes are considered post treatment is preferably used to designate a process carried out after the window pane has been arranged in a construction for which the pane has selected, this typically being a building construction. In preferred embodiments, the post treatment are used to designate a process applied after the window has been in place in the structure for a longer time period such as longer than half a year or even longer.

As will be apparent from the disclosure presented herein the zeta potential of a suspension of nano sized particles often play an important role in order to maintain a stable suspension. Accordingly, it has been found in connection with at least the first cleaning fluid and the coating fluid that the zeta potential of the suspension should preferably be kept within specific limits to maintain a stable suspension of the nano sized particles and to keep the agglomerate size within useably (for the specific purpose) limits.

A correlation exist between zeta potential and a pH value of a suspension and in many of the preferred embodiments where suspensions are used, nictric-acid are used to obtain a certain pH-value.

### CLEANING STEP & CLEANING FLUID COMPOSITION

Many material surfaces relevant for treatment according to the present invention are characterised by being of "hydrophobic nature" before the cleaning step. "Hydrophobic nature" of the surface is in this context intended to mean a surface, which is difficult to wet with the fluid composition i.e. the surface tend to repel and contract the fluid composition rather than spreading as a film. Note that this definition is different from the normal hydrophobic surface definition as having a contact angle with water above 90°. It has been found that said "hydrophobic nature" of the surface tends to repel a coating fluid composition and result in droplets of said coating fluid contracting on such surface. Hence, a "hydrophobic nature" of the surface or "difficult to wet" surface may make it difficult to homogeneously treat the surface with said coating fluid composition. It has further been found that an inhomogeneous treatment of the surface with a coating composition comprising a photocatalyst may lead to changes in the refractory index and thus the optical transparency of the coating. This may be observed as dirty spots, streaks or even a coating with rainbow colours, which is highly undesirable for many embodiments of the present invention. Also from an adhesion and durability point of view, a "difficult to wet" surface or a surface of "hydrophobic nature" is undesirable as the contact area with the fluid is limited and thus the area for chemical bonding may be limited resulting in a less durable coating. The "hydrophobic nature" of the surface may be due the surface itself and/or caused by dirt or other contaminants attached to the surface. Hence, it has been found that thorough cleaning and preconditioning of said surface of the material so as to make it susceptible for said subsequent coating step is important for the quality of said final treated surface.

The cleaning and preconditioning step according to the present invention may comprise several steps. A preferred embodiment may involve a cleaning step for cleaning and preconditioning the surface using a first cleaning fluid composition. The method may optionally comprise an initial cleaning step prior to the cleaning and preconditioning of the surface.

In a preferred embodiment according to the present invention, said initial cleaning step may involve cleaning the surface of said material by conventional means such as cleaning the surface using an initial cleaning agent comprising water and/or a soap and/or alcohol based cleaning agents and/or an oil. The initial cleaning agent may further comprise surface active agents such as tensides including anionic, cationic and non-ionic tensides. Still further said initial cleaning step may include cleaning said surface of said material using a cleaning composition comprising a bleaching agent. The surface of said material may subsequently further be washed with water prior to said first cleaning and preconditioning step.

In accordance with preferred embodiments of the present invention said first cleaning and conditioning step involves treating said surface of said material with a first cleaning fluid composition comprising at least one component resulting in a chemical mechanical polishing of said surface of said material.

In a preferred embodiment according to the present invention said first cleaning fluid composition comprises particles of ceria ($CeO_2$) dispersed in a solvent. It has been found that such ceria particles provide both an efficient cleaning effect and an efficient chemical mechanical polishing effect of said surface of said material if present in said first cleaning fluid composition.

The ceria particles may be present in a concentration in the range 0,1-30 % by weight such as in the range 0,3-20 % by weight, and preferably in the range 0,5-15 % by weight such as in the range 1-10 % by weight, and advantageously in the range 2-5 % by weight.

It has further been found that ceria particles are more efficient and more convenient to work with if the are small. If the ceria particles are too large they may create visible scratches in the surface being cleaned and for the chemical polishing particles as small as possible is generally preferred. However, it has been found that below a certain minimum size of ceria particles in suspension the mechanical part of the chemical mechanical polishing is hampered. Hence, both the ceria particles and the cleaning fluid composition need to fulfill certain requirements.

The average crystallite or primary particle size defined as an equivalent spherical diameter should preferably be smaller than 100 nanometer, such as smaller than 80 nanometer and preferably smaller than 50 nanometer and preferably smaller than 30 nanometer such as smaller than 20 nanometer and advantageously smaller than 10 nanometer. The average crystallite size or primary particle size according to the present invention may be determined from XRD (X-ray Diffraction) measurements using Scherers formula or from measurement of the surface area e.g. by the BET method.

The solvent of said first cleaning fluid composition may be selected among water, methanol, ethanol, propanol, isopropanol, butanol, alcohols and combinations thereof. In a particularly preferred embodiment the solvent of said first cleaning fluid composition comprises water.

Another important characteristic of the dispersed ceria particles has been found to be the average size of the particles in suspension. Particles suspended in a solvent generally consists of agglomerates or clusters of crystallites or primary particles. The size of such agglomerates in said first cleaning fluid composition affects a number of desirable parameters such as the stability of the suspension, efficacy of the first cleaning fluid composition, ease and convenience during use or manufacturing. Hence, in accordance with preferred embodiments of the present invention, the average size of the ceria particles dispersed in said first cleaning fluid composition should preferable be smaller than 2 micron such as below 1 micron and preferably below 750 nanometer such as below 500 nm and even more preferably below 300 nanometer such as below 200 nanometer and advantageously below 150 nanometer such as below 100 nm and preferably above 20 nm.The average particle size in suspension according to the present invention may be measured by light scattering e.g. using a Malvern Zetasizer.

The first cleaning fluid composition may be stabilized by maintaining the pH value of the dispersion in a specific range. According to a preferred embodiment of the present invention the pH value of said first cleaning fluid composition is maintained in the range 2 to 6 such as in the range 3,0 to 5,5 and preferably in the range 3,0 to 5,0 such as in the range 4,0 to 5,0. The pH value of said first cleaning fluid composition may be adjusted by adding a suitable acid such as nitric acid.

The pH value of said first cleaning fluid composition may be controlled by addition of a suitable buffer. Suitable buffers include acetic acid and/or citric acid.

The first cleaning fluid composition may further be stabilized by controlling the zeta potential of the solution. In many applications according to the present invention the zeta potential of the cleaning fluid compostion is above 30 mV such as above 40 mV, and preferably above 50 mV such as above 60 mV.

It has been found that nanoparticles of titania have a stabilizing effect on nanoparticles of ceria. A first cleaning fluid composition may advantageously further comprise other particles such as particles of titania in an amorphous and/or anatase and/or rutile and/or brookite form. Preferably said titania have an average crystallite or primary particle size below 30 nanometer such as below 20 nanometer, and preferably below 15 nanometer such as below 10 nanometer. Further the average particle size in suspension of said titania nanoparticles may be below 1 micron such as below 500 nm such as below 300 nm, preferably below 200 nm such as below 100 nm.

The concentration of said titania nanoparticles may be in the range 0,01 to 5 % by weight, such as in the range 0,02 to 2 % by weight, and preferably in the range 0,03 to 1 % by weight such as 0,05 to 0,5 % by weight.

The first cleaning fluid composition may further comprise a surfactant and/or dispersant. In many applications said surfactant and/or dispersant may be selected among chelating agents, sugars, non-ionic tensides, cationic tensides, anionic tensides, polyacrylates, polycarboxylates, polycarboxylic acid dispersants, polyacid dispersants, acrylic homopolymers such as polyacrylic acids, , TAMOL (BASF), DISPERBYK- 190 (BYK), silanes, siloxanes, alcohol amines such as diethanol amine or tri ethanol amine or 2-amino-2-methyl-propanol or combinations thereof.

According to a preferred embodiment said surfactant or dispersant may be present in a concentration up to 20 % by weight such as up to 10% by weight and preferably up to 5 % by weight such as up to 1% by weight.

The ratio of the concentration (by weight) of said dispersant and/or surfactant to the concentration (by weight) of said particles in suspension in said first cleaning fluid composition may be in the range 0,001 to 0,30 such as in the range 0,01 to 0,2 and preferably in the range 0,05 to 0,15 such as in the range 0,05-0,1.

The first cleaning fluid composition may be applied to the surface of said material by standard methods such as spraying, rolling, brushing, dipping, polished or by other conventional application methods.

Once applied to said surface of said material said cleaning fluid may in accordance with preferred of the present invention be polished into the whole surface of said e.g. by circular motions and may be allowed to dry for a couple of minutes. After drying the second cleaning composition is preferably polished away. This procedure may be repeated several times preferably until a film spreading effect is observed. After the last treatment by said first cleaning fluid composition, the surface of said material may preferably be washed by water so as to obtain a clean and more hydrophilic surface of said material.

A particularly preferred embodiment of the present invention involves polishing said second fluid composition into the surface using a cloth or wipe. Said wipe may in some applications also constitute the method for applying said first cleaning fluid composition to said surface of said material. It is important that cloth or wipe do not leave dust on the cleaned surface. Preferred wiper materials include endless polymer materials, microfibres, thermo-bonded spunlace etc. In another particularly preferred embodiment of the present invention, the cloth or wipe is in the form of a wet wipe i.e. is impregnated with said first cleaning fluid composition and is also used for transferring said first cleaning fluid composition to said surface.

The second cleaning fluid may according to the present invention may further comprise a disinfectant to prevent microbial growth during storage.

Some surfaces may according to the present invention may further comprise a third cleaning and preconditioning step, wherein said surface of said material is further preconditioned for said subsequent coating step by treatment with one or more preconditioning fluid composition/-s. Such third preconditioning or priming step is according to the present invention particularly preferred for porous surfaces and/or surfaces comprised by organic materials which may not be stable in direct contact with said coating composition and/or which may not be wetted by said coating composition.

In many embodiments according to the present invention said preconditioning fluid may comprise amorphous titania and/or a precursor thereof, and/or amorphous silica and/or a precursor thereof and/or polyacrylates and/or polycarboxylates and/or polycarboxylic acid dispersants and/or polyacid dispersants and/or acrylic homopolymers such as polyacrylic acids, and/or silanes and/or siloxanes or combinations thereof.

The preconditioning fluid composition in said may be applied to the surface of said material by standard methods such as spraying, rolling, brushing, dipping, polished or by other conventional application methods.

In a preferred embodiment according to the present invention, the said surface of said material has a contact angle with water after said cleaning and preconditioning step are below 20 degree such as below 15 degree and preferably below 10 degree.

While the cleaning fluid composition disclosed herein in many cases is disclosed in connection with rendering a surface susceptible to receive a subsequent coating it is envisaged, that the cleaning fluid composition may have a more general application, namely as an cleaning agent for cleaning surfaces for which no further coating is intended.

*COATING STEP & COATING FLUID COMPOSITION*

The coating fluid composition for use in said coating step generally comprises photocatalytiically active nanoparticles of titania (TiO2). Said nanoparticles may comprise the anatase and/or the rutile and/or the brookite crystal form of titania or a combination thereof. Further, said photocatalytically active nanoparticles are according to the present invention predominantly present in their final crystal form in said coating fluid compostion i.e. not heat treatment is required for transformation of said nanoparticles into their active form.

The average primary particle size or crystallite size of said nanoparticles of titania expressed as an equivalent spherical diameter may be below 30 nm such as below 20 nm, and preferably below 15 nm such as below 10 nm. The average primary particle size or crystallite size according to the present invention may be measured by X-ray Diffraction (XRD) using Sherers formula.

It is further preferred that particle size distribution of said nanoparticles are relatively narrow. Hence, according to many aspects of the present invention the standard deviation of the particle size distribution of said nanoparticles of titania are less than 5 times the average primary particle size such as a standard deveiation of less than 3 times the average primary particle size, and preferably the standard deviation of said particle size distribution is less than 1 times the average primary particle size such as less than 0,5 time the average primary particle size.

Said nanoparticles of titania may according to some aspects of the present invention further comprise other elements. In some embodiments such elements may be introduced into said nanoparticles with the aim to improve the photocatalytic activity of said nanoparticles by inhibiting charge recombination within said photocatalytically active nanoparticles and/or they may be doped onto the surface of said nanoparticles with the aim of improving the efficacy of said nanoparticles by enhancing the light absorption of said nanoparticles by changing the overall band gap of said nanoparticles i.e. by enhancing the range of wave lengths which can be absorbed by said nanoparticles and/or with the aim of promoting specific chemical reactions.

In a preferred embodiments said nanoparticles of titania may further comprise one or more oxides and/or oxyhydroxides of one or more of the elements Sn, Sr, W, Bi, Fe, Ni, Co, Ce, V, Si, Mo, Zr, Mn, Ba or combinations thereof.

In another preferred embodiment of the present invention said nanoparticles of titania may comprise and/or further comprise one or more elements selected from the group of Au, Ag, Cu, Zn, and Pt.

In still another preferred embodiment said nanoparticles of titania may comprise and/or further comprise one or more elements selected from the group of Pd, Rh, Ru, Os, and Ir.

Said nanoparticles may be doped or additionally be doped with one or more of the elements nitrogen and/or sulphur and/or carbon and/or phosphates and/or fluorine.

In a particularly preferred embodiment said photocatalytically active nanoparticles are having a core and one or more shells around said core. The outer shell of said particle is preferably titania in the anatase and/or rutile and/or brookite crystal form. In many aspects it may further be advantageous if said core shell structure of said photocatalytically active nanoparticles multiple layers of semiconductors and are having decreasing band gap of each layer in the direction of the outer surface to the core thereby making said particles at least partly active in the visible light range from 400-700 nm.

The concentration of said nanoparticles in said coating fluid composition may be in the range 0.05 to 10 % by weight such as in the range 0.1 to 5 % by weight, and preferably in the range 0.1 to 1 % by weight such as in the range 0.2 to 0.5 % by weight.

It has been found that not only the primary particle size, particle size distribution and composition of said photocatalytically active nanoparticles in said coating fluid composition, but also the coagulation index are important for activity said coating. Primary particles in a suspension are present in a more or less coagulated or aggregated form, and the size of said aggregates affects e.g. both the activity and the stability of said coating fluid composition, as well as the final quality of said coating. The coagulation index according to the present invention is defined as the ratio of the effective particle size in suspension to the primary particle size. The effective particle size according to the present invention may be measured by e.g. a light scattering measurent using e.g. a Malvern zetasizer. Hence, according to a preferred embodiment of the present invention, the coagulation index of said nanoparticles in said coating fluid composition is below 15 such as below 10, preferably below 8 such as below 6. A particularly preferred range is 1.5 to 10 such as in the range 2 to 6.

In most preferred embodiments of the present invention the coating fluid composition comprises water as solvent.

The pH of said coating fluid composition have been found to be important for e.g. the processing and stability of said coating fluid composition. The pH value of said coating fluid composition should preferably be in the range 7 to 13 such as in the range such as in the range 8 to 12 and preferably in the range 9 to 12 such as in the range 10 to 12.

The zeta potential of said coating fluid composition is often also controlled so as obtain a stable suspension. In many embodiments said zeta potential of said coating fluid composition is controlled so that it is below -30 mV such as below -40 mV, and preferably below - 50 mV such as below -60 mV.

The coating fluid composition may comprise ammonia. Besides assisting in adjusting pH in the desired range ammonia has been found to provide the advantage of evaporating during said coating step and compared to other bases it do not leave drying marks after said treatment. Hence, it is easier to obtain a clear coating.

The concentration of ammonia in said coating fluid composition may be in the range 0.05 to 5 % by weight such as in the range 0.1 to 1 % by weight and preferably in the range 0.2 to 0.5 % by weight.

The coating fluid composition may further comprise one or more stabilizing agent/-s or surfactants for stabilizing said nanoparticles in said coating fluid composition. According to a preferred embodiment said stabilizing agent is selected among sugars, chelating agents, silanes, polyacrylates, polycarboxylates, polycarboxylic dispersants, poly acid dispersants, acrylic homopolymers such as polyacrylic acids, silanes, siloxanes or combinations thereof.

In a particularly preferred embodiment said stabilizing agent are a stabilizer which can be removed from said treated surface after curing e.g. by washing and/or photocatlytic degradation such as a sugar such as a saccharine like compound.

The weight ratio of the concentration of said stabilizer to the concentration of said particles in suspension may be in the range 0.001 to 0.3 such as in the range 0.01 to 0.2 and preferably in the range 0.05 to 0.15 such as in the range 0.05 to 0.1.

The coating fluid composition may further comprise one or more binders so as to chemically bind said nanoparticles to said surface of said material. One or more binders may be selected among silanes, siloxanes, alkoxides of titanium, alkoxides of silicium, organic resins such as acrylic resins, or combinations thereof.

The ratio of concentration (by weight) of said one or more binders to the concentration of said nanoparticles may be in the range 0.001 to 0.3 such as in the range 0.01 to 0.2 and preferably in the range 0.05 to 0.15 such as in the range 0.05 to 0.1.

The coating fluid composition may be applied to the surface of said material by standard methods such as spraying, rolling, brushing, dipping, polishing or by other conventional application methods.

A preferred application system for many applications according to the present invention is applying said coating fluid composition to said surface using a wipe or a cloth. The coating fluid composition may be sprayed on to the cleaned and preconditioned surface of said material and a homogeneous film obtained using said wipe to deposit said coating fluid composition to the whole surface e.g. by polishing by a circular motion. Alternatively, said coating fluid composition may first be dispensed to said wipe or cloth and subsequently be transferred and deposited in a thin film on the whole surface of said material in a similar way.

The hydrophilicity of said cleaned and preconditioned surface ensures that substantially all of the surface is wetted by said coating fluid composition, and dries more homogeneously and faster due to the film formation (wetting) on said surface. This again leads to a clearer and more transparent coating of the coated surface.

In particularly preferred embodiment of the present invention, the application system for said coating fluid composition in said coating step is in the form of a wet wipe, wherein said wiper is pre-impregnated with controlled amount of said coating fluid composition.

A suitable amount of coating fluid composition per squaremeter of material surface to treated is in many applications of the present invention in the range 1 - 30 ml/m2 of surface such as in the range 5 -20 ml/m2 and preferably in the range 5 - 15 ml/m2 such as 8-12 ml of said coating fluid composition per squaremeter of material surface to be treated.

It has been found that the wiper material is important in many aspects of the present invention, and particularly for applications where a clear and highly transparent coating are a key issue. For such applications it is important that cloth or wipe do not leave dust on the cleaned surface. Preferred wiper materials include nonwoven materials made by hydroentanglement, spunlacing, thermo-bonding etc. of endless polymeric microfibers or microfilaments. The material of said wiper may comprise viscose, lyocell, cotton, natural fibers, polyester, polyamide, polyimide, polyacrylonitrile, polyvinylalcohol, polypropylene, polyethylene, polylactic acid, polytetrafluoroethylene, polyethersulfone or a combination thereof e.g. fibres of different materials may be spun into a common thread comprising different materials.

A preferred embodiment of the present invention is the treatment glass surfaces such as window glass so as to provide an easy cleaning or self cleaning effect. Such application sets a high demand for the treatment to be clear and/or to have a high light transmittance. It has been found that a wiper for such application preferably should have a relatively uniform surface topography e.g. wipes with a patterned and/or appertured surface topography shows a higher tendency to form a dirty looking result such as stripes, spots following the patterns of the wipe. Hence, a substantially lint free wipe e.g. with a relatively smooth surface is preferred for such applications.

A particularly preferred wipe according to an embodiment invention is a microfiber or microfilament cloth made from endless composite fibres of polyamide and polyester.

The thickness of said coating after said treatment may be less than 300 nanometer such as less than 200 nanometer, and preferably less than 100 nanometer such as less than 50 nanometer. Advantageously the thickness of said coating may be in the range 10 nm -30 nm, such as 10-20 nm.

In a preferred embodiment according to the present said coating comprises discrete nanoparticles on the surface of said material. Said nanoparticles or clusters of nanoparticles may in many applications according to the present invention be of substantially the same size as the effective particle size in said coating fluid composition.

The drying time, defined as the time until said coating is fingertouch dry, is in most applications of the present invention less than 60 minutes such as less than 30 minutes, and preferably less than 20 minutes such as less than 15 minutes depending of the temperature and humidity.

The curing time and final settling time of the coating depends on the actual binder system selected, and may for some applications be up to 14 days such as up to one week.

In a preferred embodiment the particle concentration on said surface may be increased by repeating said coating step several times. For most embodiments the coating is sufficiently cured so that the coating step may be repeated after less than 3 days such as after less than 2 days, and preferably less than 1 day such as after less than 12 hours.

The surface treated according to the present invention has self cleaning properties as it is photocatalytical activity in the presence of light, and has a superhydrophilic nature. In the presence of rain the superhydrophilic nature creates a rinsing effect which may wash away dirt. Further said superhydrophilic nature of the treated surface allows the surface to dry fast due to the film formation. The photocatalytic properties of the surface degrades organic materials including microbials. The coating is durable as the photocatalytic active materials is chemically bound to the surface of said material, and a high clearness and transparency is obtained according to the present invention. Further as the coating according to the present invention can be made at low temperature and do not require heat treatment to obtain its final structure, it may be applied on existing surfaces as a post treatment. While the coating fluid composition disclosed herein, in many cases is disclosed in connection with coating a surface that has been rendered susceptible to receive a subsequent coating by the cleaning fluid composition according to the present invention it is envisaged, that the coating fluid composition may have a more general application, namely as a coating fluid composition useable for coating surfaces that has been rendered susceptible to coating by other means.

**Examples of embodiments of the invention:**

**Example 1a: Preparing of window glass for nanofluid coating**

Before applying the cleaning fluid composition the window is cleaned by normal means (soap and water) to remove all dirt and grease. It is important the glass surface has been thoroughly cleaned for best and lasting result. When the glass is dry the preconditioning of the glass surface is started. The cleaning fluid composition is a 3 wt% $CeO_2$ dispersion in water with a primary particle size of the Ceria nanoparticles of 12 nm determined as the equivalent spherical diameter from BET measurements. The cleaning fluid composition has a pH of 5.1 and the median particle size in solution is 160 nm determined by Malvern's ZetasizerNano.

The trigger spray bottle containing the cleaning fluid composition is shaken and the cleaning fluid composition is sprayed over the glass surface - 15 ml/m² glass. A microfiber wipe is used to distribute the cleaning fluid composition across the glass surface and the glass is carefully polished using circular movements with the wipe. The polishing is terminated when the fluid does not contract to droplets and water can spread as a film across the surface.

The cleaning fluid composition is washed away from the glass using water. A new microfiber wipe is moistened with water and the glass surface is polished until a fully transparent and clear glass is obtained. If a thin waterfilm is not created when the wipe is moved over the glass the treatment needs to be repeated.

**Example 1b: Coating of window glass with nanofluid coating in a wet wipe configuration**

The window glass was cleaned and pre-conditioned according to Example 1a. The nanofluid is used in a wet wipe solution. The wipe material is a 80g/m² microfiber endless polymer and 10 ml nanofluid per m² glass is used. The nanofluid is a stable nanoparticle solution containing 0.5 wt% $TiO_2$ in water. The pH of the nanofluid is 10.7 and the median particle size in solution is 18 nm determined by Malvern's ZetasizerNano. The window glass is polished with a circular movement. The glass surface area is polished twice with the same nanofluid wet wipe. The glass is left to dry under ambient conditions and the window glass was finger touch dry after 15 minutes. The window glass had maintained the transparency and no stripes were visible. Furthermore, after the drying and curing time the coating showed self-cleaning properties with regards to photocatalytic activity and superhydrophilicity.

**Example 1c: Coating of window glass with nanofluid coating in a bottle configuration**

The window glass was cleaned and pre-conditioned according to Example 1a. The nanofluid is used in a bottle solution with a dry wipe material as application tool. The wipe material is microfiber endless polymer and 10 ml nanofluid per m² glass is used. Prior to coating the window the nanofluid is sprayed onto the wipe. The nanofluid is a stable nanoparticle solution containing 0.5 wt% $TiO_2$ in water. The pH of the nanofluid is 10.7 and the median particle size in solution is 18 nm determined by Malvern's ZetasizerNano. The window glass is polished with a circular movement. The glass surface area is polished twice with the same nanofluid wipe. The glass is left to dry under ambient conditions and the window glass was finger touch dry after 15 minutes. The window glass had maintained the transparency and no stripes were visible. Furthermore, after the drying and curing time the coating showed self-cleaning properties with regards to photocatalytic activity and superhydrophilicity.

**Example 2: Size effect of Ceria nanoparticles**

The effect of the size of the ceria nanoparticles in the cleaning fluid composition was investigated. A window with "hydrophobic nature" was divided into different areas and the window was cleaned and preconiditoned according to Example 1a. Two different cleaning fluid compositions were used: 1) 3 wt% Ceria in water with a median size in solution of 160 nm 2) 3 wt% Ceria in water with a median size in solution of 600 nm. From this test it was shown that the size of the ceria in the cleaning fluid composition affects the efficiency of the cleaning fluid composition related to the ease and convenience during the priming step. The cleaning fluid 1) with the smallest ceria particles showed a much more efficient product than the larger sized cleaning fluid composition 2). Furthermore, the very hydrophobic edges of the window glass near the silicon sealing where possible to prime with cleaning fluid 1) but not with cleaning fluid 2.

**Example 3: Wipe Quality for wet wipe configuration**

One of the criteria's for the wipe material for the nanofluid wet wipe configuration is that the material needs to be lint free. One of the important properties of microfiber materials is they are lint free; due to their fabrication from very long ("endless") polymer fibres. However, the content of residual species from the manufacturing step can change the properties of the nanofluid so it will leave stripes on the window glass. Furthermore, residual species in the wipe material can cause stripes on the glass by it self.

Therefore a proportional relation between conductivity and wipe:water mass fraction, a material dependent coefficient was defined, which tells the quality of the wipe for wet wipe purposes:

$$\text{Wipe coefficient} \equiv \kappa \cdot \frac{m_{water}}{m_{wipe}}$$

The lower the wipe coefficient, the less salts in the wipe and, thus, the better quality. Two endless microfiber materials were tested for the use as wet wipe material for the coating fluid.

Table 1. Self-cleaning values.

| | Evolon 60 | Norafin 60 |
|---|---|---|
| Type | Endless microfiber | Endless microfiber |
| Content | 70 % Polyester | 70 % Polyester |
| | 30 % Polyamid | 30 % Polyamid |
| Density | 60 g/m$^2$ | 60 g/m$^2$ |
| Supplier | Evolon/Freudenberg | Norafin |

10x20 cm wipe material samples were cut for each wipe material, where a tweezer held on the wipe and the wipe was cut with a pair of clean (washed with 96% ethanol) scissors. Wipe was weighed off alone and with the tweezers, the wipe was pushed into a test tube and closed. Then water was added. In #1 20 ml were added, in #2 30 ml were added, in #3 40 ml were added and in #4 50 ml were added. The tubes was shaken for 2 minutes and the water squeezed out and the conductivity measured and the wipe coefficient was calculated as seen in Table 2.

Samples (size 20 × 30 cm) of Evolon 60 and Norafin 60 endless microfiber material were soaked with 10 ml Nanofluid in sealed plastic bags. After a week, the content was squeezed out and evaluated. The results are shown in Table 2.

Table 2.

| Sample | Wipe Coefficient [mS/cm] | Nanofluid Conc. [%] | Viscosity [mPa·s] | pH [-] |
|---|---|---|---|---|
| Nanofluid | - | 100 | 1.01 | 10.70 |
| Evolon 60 | 1.35 ± 0.04 | 66 | 1.34 | 10.43 |
| Norafin 60 | 0.61 ± 0.01 | 95 | 1.02 | 10.58 |

As seen, the nanoparticle concentration and viscosity changes dramatically in Evolon 60, but not in Norafin 60. The visual appearances confirm the change; nanoparticles from Evolon wipe were aggregated, while Norafin 60 did not change the appearance at all. The investigation of the wipe coefficient shows that to use the wipe in a nanofluid wet wipe configuration a wipe coefficient of < 1.0 is needed to avoid stripes on the window glass and to avoid changes in the physical-chemical properties of the nanofluid.

**Example 4: Effect of cleaning fluid and nano fluid on window glass**

Window glass sample were cleaned, preconditioned and coated with the cleaning fluid composition and the nanofluid as described in Example 1a and 1c. The window glass samples were dried and cured for 24 hours. The window glass samples were then exposed to UV light (Philips Lamps - 4 mW/m$^2$ at 365 nm) for 4 hours and the contact angle was measured with the Krüs DSA 10 Mh2. The glass samples where then left in boxes, to keep them dark, for 24 hours and the contact angle was measured again. A window glass samples only cleaned with water were used as reference samples. In table 3 the contact angles for the window glass samples are shown.

Table 3. Contact angle measurements.

| Contact angle after | Reference glass sample | Pre-conditioned glass sample | Pre-conditioned and coated glass sample |
|---|---|---|---|
| Before UV | 53.3° | 8.6° | 31.3° |
| 4 hours of UV exposure | | 20.3° | <1° |
| 21 hours in dark | 49.6° | 25.8° | 4.8° |

**Example 5: Self-cleaning effect**

The self-cleaning effect was investigated according to the definition of self-cleaning effect from the EU project NMP3-CT-2003-505952. The standard procedure for the self-cleaning test is as following:

1) Prepare glass samples 150 x 150 mm
2) Rinse the glass with DI water.
3) UVA irradiate the samples for 12 hours according to ISO 4892-3 and ISO 4892-1:2000.
4) Haze measurement ($H_{original}$) according to ASTM D 1003.
5) Place the glass sample in the spray machine.
6) Spray the dirt mixture on the glass (definition of dirt mixture and the spray conditions are listed in the EU report).
7) Dry the glass sample vertically at room temperature and for 1 hour at 50 °C.
8) Haze measurement ($H_{cycle\ x\ dirt}$).
9) UVA irradiate the sample for 12 hours.
10) Haze measurement ($H_{cycle\ x\ SUN}$).
11) Insert the glass sample in the test rack and spray the DI water (the spray conditions are listed in the EU report).
12) Vertically drying of the sample.
13) Haze measurement ($H_{cycle\ x\ RAIN}$).
14) Repeat steps 3-13.

For each glass slide the haze is measured in five points with symmetry like on a dice, and the self-cleaning effect is calculated for each point:

$$\% \ Cleaning \ Effect = 100 \times \frac{H_{cycle2dirt} - H_{final}}{H_{cycle2dirt} - H_{original}}$$

Normal float glass has a self-cleaning effect of 25-85 %. Thus, to be self-cleaning the value must be > 85 %.
Five glass samples were prepared according to Example 1a and 1c. The five glass samples were cured for 4 weeks and pre-activated before testing. The five glass samples together with 5 reference samples were tested for % cleaning effect.

Table 4. Self-cleaning values.

|  | Reference glass sample | Coated glass sample |
|---|---|---|
| Cleaning value % | 63.4 $\pm$ 5.0 | 89.7 $\pm$ 3.0 |

**Example 6: The influence of Environmental exposure on the self-cleaning effect**

To evaluate the effect of chemical/environmental exposure on the self-cleaning coating three simulation tests were conducted. In these tests the influence of acids (acid rain), hard water, and salt water on the self-cleaning performance was invetigated.

The samples are coated according to Example 1a and 1c and tested with the method described in Example ?? cured in > 4 weeks prior to test. Before the samples are tested for self-cleaning effect they are exposed to the different chemicals.

1) Mix the exposure mixtures - 3.5 wt% sodium chloride in water (salt water), HSO4 and HNO3 adjusted water with a pH of 2.0 (acid), and hard water with a hardness 24 (hard water).
2) Lower the coated samples in the mixture for 30 min.
3) Vertically dry the samples at ambient conditions for 30 min.
4) Drying and UV exposure in 48 hours in the QUV according to ISO 4892-3 and ISO 4892-1:2000.
5) Self-cleaning test

The results from the self-cleaning test are shown in table 5

Table 5. Self-cleaning values.

|  | Salt water exposure | Acid exposure | Hard water exposure |
|---|---|---|---|
| Cleaning value % | 89.0 $\pm$ 2.0 | 92.4 $\pm$ 1.0 | 90.0 $\pm$ 2.4 |

The invention comprises the following aspects and/or advantages:
The surface of said material substantially maintains its optical clearness after said treatment steps.

At least one component of said one or more fluid compositions is chemically bonded to said surface of said material after said treatment steps.

The surface of said material after said treatment steps are superhydrophilic and have photocatalytical and/or anti-bacterial and/or anti-mold activity after said treatment steps.

The contact angle with water after the cleaning treatment using the first cleaning fluid composition is below 15 degree such as below 10 degree, such as below 5 degree.

It should be noted that the term "first cleaning fluid composition" is meant to denote the composition used in the cleaning step of claim 1, whilst the term "initial cleaning agent" is a possibly different composition used in an initial cleaning step prior to the cleaning step of claim 1.

**Claims**

1.  A method for treating the surface of a solid material, the surface being a window pane and the method being applied to existing surfaces as a post treatment, the method comprising the steps of:

    - cleaning said surface using a first cleaning fluid composition, so as to provide a clean and preconditioned surface having a contact angle with water below 15°, wherein the first cleaning fluid composition comprises

        - water as a solvent
        - at least one component resulting in a chemical mechanical polishing wherein the at least one component comprises ceria, $CeO_2$, particles suspended in water,

    and wherein the pH value of said first cleaning fluid composition is in the range of 2.0 to 6,
    - coating one or more times said surface by depositing a coating fluid composition comprising a photocatalyst in a suspended form on said clean, preconditioned surface, the coating fluid composition comprises

- photocatalytic active nanoparticles of titania, $TiO_2$, and
- water as a solvent,

wherein the cleaning and the coating steps are performed at a temperature in the range 5-50° C.

2. A method according to claim 1, wherein

- the average primary particle size of said ceria particles in supsension in said first cleaning fluid composition is below 100 nm, such as smaller than 80 nm and preferably below 50 nm and more preferably below 30 nm such as below 20 nm and advantageously below 10 nm,
- the average particle size of said ceria particles in suspension in said first cleaning fluid composition is below 200 nm, more preferably below 150 nm, most preferably below 100 nm and preferably above 20 nm,
- the concentration of said ceria particles in said first cleaning fluid composition are in the range 2-5 w/w %, preferably in the range of 3-5 w/w %.

3. A method according to any of the preceding claims, wherein said first cleaning fluid composition further comprises a buffer to maintain said cleaning composition in a specific pH range, said buffer comprises acetic acid and/or citric acid, and/or nitric acid.

4. A method according to any of the preceding claims, wherein said coating fluid composition has a pH value in the range 9-12, most preferably in the range 10-12 and wherein said coating fluid composition comprises ammonia, and wherein the concentration of ammonia in said coating fluid composition is in the range 0.05 to 5 % by weight, preferably in the range 0.1 to 1 % by weight, and most preferably in the range 0.2 to 0.5 % by weight.

5. A method according to any of the preceding claims, wherein the thickness of said coating after said coating step is below 50 nm such as below 30 nm and preferably below 20 nm and advantageously in the range 10-20 nm.

6. A cleaning fluid composition, preferably for use in a method according to any of the preceding claims, comprising at least one component resulting in a chemical mechanical polishing said cleaning fluid composition comprises:

- ceria, $CeO_2$, particles suspended in water and wherein said ceria, $CeO_2$, particles have a primary particle size below 30 nm such as below 20 nm, and preferably below 15 nm and even more preferably below 10 nm and wherein the average particle size of said ceria, $CeO_2$, particles in suspension is below 500 nm, such as below 300 nm, preferably below 200 nm, more preferably below 150 nm, and most preferably the average particle size is below 100 nm, and wherein the concentration of said ceria, $CeO_2$, particles in said first cleaning fluid composition are in the range 0.3-20 w/w %, such as in the range 0.5-15 w/w %, preferably in the range 1-10 w/w % and more preferably in the range 2-5 w/w %, and wherein
- said first cleaning fluid composition has a zeta potential above 30 mV, preferably above 40 mV, preferably above 50 mV, and most preferably above 60 mV,
- the pH value of said first cleaning fluid composition is preferably in the range 3.0 to 5.0, such as in the range 4.0 to 5.0, and wherein said first cleaning fluid composition further comprises a buffer to maintain said cleaning composition in a specific pH range, and wherein said buffer comprises acetic acid and/or citric acid, and/or nitric acid.

7. A cleaning fluid composition according to claim 6, wherein said ceria, $CeO_2$, particles have an average particle size of minimum 20 nm.

8. Use of a cleaning fluid composition according to claim 6 or 7 for cleaning of glass such as windows and/or glass panes and/or mirrors and/or lenses and/or tiles such as tiles in a bath room and rendering such surfaces clean and hydrophilic with a contact angle for water on such surface below 15°.

**Patentansprüche**

1. Verfahren zum Behandeln der Oberfläche eines festen Materials, wobei die Oberfläche eine Fensterscheibe ist und das Verfahren auf bestehende Oberflächen als eine Nachbehandlung angewendet wird, wobei das Verfahren die folgenden Schritte umfasst:

- Reinigen der Oberfläche unter Verwendung einer ersten Reinigungsflüssigkeitszusammensetzung, um so eine saubere und vorbehandelte Oberfläche mit einem Kontaktwinkel für Wasser unter 15° bereitzustellen, wobei die erste Reinigungsflüssigkeitszusammensetzung Folgendes umfasst:

- Wasser als Lösungsmittel
- zumindest eine Komponente, die in einer chemisch-mechanischen Politur resultiert, wobei die zumindest eine Komponente in Wasser suspendierte Cerdioxid ($CeO_2$)-Partikel umfasst,

und wobei der pH-Wert der ersten Reinigungsflüssigkeitszusammensetzung in dem Bereich von 2,0 bis 6 liegt,
- einmaliges oder mehrmaliges Beschichten der Oberfläche durch Ablagern einer Beschichtungsflüssigkeitszusammensetzung umfassend einen Fotokatalysator in einer suspendierten Form auf der sauberen, vorbehandelten Oberfläche, wobei die Beschichtungsflüssigkeitszusammensetzung Folgendes umfasst:

- fotokatalytisch aktive Nanopartikel von Titandioxid ($TiO_2$) und
- Wasser als Lösungsmittel,

wobei die Reinigungs- und die Beschichtungsschritte bei einer Temperatur in dem Bereich von 5-50 °C durchgeführt werden.

2. Verfahren nach Anspruch 1, wobei

- die durchschnittliche primäre Partikelgröße der Cerdioxidpartikel in Suspension in der ersten Reinigungsflüssigkeitszusammensetzung unter 100 nm liegt, wie etwa kleiner als 80 nm und bevorzugt unter 50 nm und bevorzugter unter 30 nm, wie etwa unter 20 nm und vorteilhafterweise unter 10 nm,
- die durchschnittliche Partikelgröße der Cerdioxidpartikel in Suspension in der ersten Reinigungsflüssigkeitszusammensetzung unter 200 nm liegt, bevorzugter unter 150 nm, am bevorzugtesten unter 100 nm und bevorzugt über 20 nm,
- die Konzentration der Cerdioxidpartikel in der ersten Reinigungsflüssigkeitszusammensetzung in dem Bereich von 2-5 % w/w, bevorzugt in dem Bereich von 3-5 % w/w liegt.

3. Verfahren nach einem der vorstehenden Ansprüche, wobei die erste Reinigungsflüssigkeitszusammensetzung ferner einen Puffer umfasst, um die Reinigungszusammensetzung in einem bestimmten pH-Bereich zu halten, wobei der Puffer Essigsäure und/oder Zitronensäure und/oder Salpetersäure umfasst.

4. Verfahren nach einem der vorstehenden Ansprüche, wobei die Beschichtungsflüssigkeitszusammensetzung einen pH-Wert in dem Bereich 9-12, am bevorzugtesten in dem Bereich 10-12 aufweist und wobei die Beschichtungsflüssigkeitszusammensetzung Ammoniak umfasst und wobei die Konzentration von Ammoniak in der Beschichtungsflüssigkeitszusammensetzung in dem Bereich von 0,05 bis 5 Gew.-%, bevorzugt in dem Bereich von 0,1 bis 1 Gew.-% und am bevorzugtesten in dem Bereich von 0,2 bis 0,5 Gew.-% liegt.

5. Verfahren nach einem der vorstehenden Ansprüche, wobei die Dicke der Beschichtung nach dem Beschichtungsschritt unter 50 nm liegt, wie etwa unter 30 nm und bevorzugt unter 20 nm und vorteilhafterweise in dem Bereich 10-20 nm.

6. Reinigungsflüssigkeitszusammensetzung, bevorzugt zur Verwendung in einem Verfahren nach einem der vorstehenden Ansprüche, umfassend zumindest eine Komponente, die in einer chemisch-mechanischen Politur resultiert, wobei die Reinigungsflüssigkeitszusammensetzung Folgendes umfasst:

- in Wasser suspendierte Cerdioxid ($CeO_2$)-Partikel, wobei die Cerdioxid ($CeO_2$)-Partikel eine primäre Partikelgröße unter 30 nm aufweisen, wie etwa unter 20 nm und bevorzugt unter 15 nm und noch bevorzugter unter 10 nm, und wobei die mittlere Partikelgröße der Cerdioxid ($CeO_2$)-Partikel in Suspension unter 500 nm beträgt, wie etwa unter 300 nm, bevorzugt unter 200 nm, bevorzugter unter 150 nm und am bevorzugtesten mit einer durchschnittlichen Partikelgröße unter 100 nm, und wobei die Konzentration der Cerdioxid ($CeO_2$)-Partikel in der ersten Reinigungsflüssigkeitszusammensetzung in dem Bereich 0,3-20 % w/w liegt, wie etwa in dem Bereich 0,5-15 % w/w, bevorzugt in dem Bereich 1-10 % w/w und bevorzugter in dem Bereich 2-5 % w/w, und wobei
- die erste Reinigungsflüssigkeitszusammensetzung ein Zeta-Potential über 30 mV, bevorzugt über 40 mV, bevorzugt über 50 mV und am bevorzugtesten über 60 mV aufweist,
- der pH-Wert der ersten Reinigungsflüssigkeitszusammensetzung bevorzugt in dem Bereich von 3,0 bis 5,0 liegt wie etwa in dem Bereich von 4,0 bis 5,0, und wobei die erste Reinigungsflüssigkeitszusammensetzung ferner einen Puffer umfasst, um die Reinigungszusammensetzung in einem bestimmten pH-Bereich zu halten, und wobei der Puffer Essigsäure und/oder Zitronensäure und/oder Salpetersäure umfasst.

**7.** Reinigungsflüssigkeitszusammensetzung nach Anspruch 6, wobei die Cerdioxid ($CeO_2$)-Partikel eine durchschnittliche Partikelgröße von mindestens 20 nm aufweisen.

**8.** Verwendung einer Reinigungsflüssigkeitszusammensetzung nach Anspruch 6 oder 7 zum Reinigen von Glas wie etwa Fenstern und/oder Glasscheiben und/oder Spiegeln und/oder Linsen und/oder Fliesen wie etwa Fliesen in einem Badezimmer und Gestalten dieser Oberflächen als sauber und hydrophil mit einem Kontaktwinkel für Wasser auf dieser Oberfläche unter 15°.

**Revendications**

**1.** Procédé pour le traitement de la surface d'un matériau solide, ladite surface étant une vitre et ledit procédé étant appliqué aux surfaces existantes en tant que post traitement, ledit procédé comprenant les étapes de :

- nettoyage de ladite surface à l'aide d'une première composition fluide de nettoyage de façon à fournir une surface propre et pré-conditionnée possédant un angle de contact avec de l'eau inférieur à 15°, ladite première composition fluide de nettoyage comprenant

- l'eau en tant que solvant
- au moins un composant causant un polissage mécano-chimique, ledit au moins un composant comprenant des particules d'oxyde de cérium, $CeO_2$, en suspension dans l'eau,

et la valeur du pH de ladite première composition fluide de nettoyage étant comprise dans la plage allant de 2,0 à 6,
- revêtement une ou plusieurs fois de ladite surface par dépôt d'une composition fluide de revêtement comprenant un photocatalyseur sous une forme en suspension sur ladite surface propre et pré-conditionnée, ladite composition fluide de revêtement comprenant

- des nanoparticules photocatalytiquement actives d'oxyde de titane, $TiO_2$, et
- l'eau en tant que solvant,

lesdites étapes de nettoyage et de revêtement étant effectuées à une température comprise dans la plage allant de 5 à 50°C.

**2.** Procédé selon la revendication 1,

- ladite taille moyenne de particules primaires des dites particules d'oxyde de cérium en suspension dans ladite première composition fluide de nettoyage étant inférieure à 100 nm, telle qu'inférieure à 80 nm et de préférence inférieure à 50 nm et idéalement inférieure à 30 nm telle qu'inférieure à 20 nm et avantageusement inférieure à 10 nm,
- la taille moyenne de particule desdites particules d'oxyde de cérium en suspension dans ladite première composition fluide de nettoyage étant inférieure à 200 nm, de préférence inférieure à 150 nm, idéalement inférieure à 100 nm et de préférence supérieure à 20 nm,
- la concentration desdites particules d'oxyde de cérium dans ladite première composition fluide de nettoyage étant comprise dans la plage allant de 2 à 5 % p/p, de préférence dans la plage allant de 3 à 5 % p/p.

**3.** Procédé selon l'une quelconque des revendications précédentes, ladite première composition fluide de nettoyage comprenant en outre un tampon pour maintenir ladite composition de nettoyage dans une plage de pH spécifique, ledit tampon comprenant de l'acide acétique et/ou de l'acide citrique et/ou de l'acide nitrique.

**4.** Procédé selon l'une quelconque des revendications précédentes, ladite composition fluide de revêtement possédant une valeur de pH comprise dans la plage allant de 9 à 12, idéalement dans la plage allant de 10 à 12 et ladite composition fluide de revêtement comprenant de l'ammoniac, et ladite concentration d'ammoniac dans ladite composition fluide de revêtement étant comprise dans la plage allant de 0,05 à 5 % en poids, de préférence dans la plage allant de 0,1 à 1 % en poids et idéalement dans la plage allant de 0,2 à 0,5 % en poids.

5. Procédé selon l'une quelconque des revendications précédentes, ladite épaisseur dudit revêtement après ladite étape de revêtement étant inférieure à 50 nm telle qu'inférieure à 30 nm et de préférence inférieure à 20 nm et avantageusement dans la plage allant de 10 à 20 nm.

6. Composition fluide de nettoyage, de préférence destinée à être utilisée dans un procédé selon l'une quelconque des revendications précédentes, comprenant au moins un composant causant un polissage mécano-chimique, ladite composition fluide de nettoyage comprenant :

   - des particules d'oxyde de cérium, $CeO_2$, en suspension dans l'eau et lesdites particules d'oxyde de cérium, $CeO_2$, possédant une taille de particules primaires inférieure à 30 nm telle qu'inférieure à 20 nm et de préférence inférieure à 15 nm et idéalement inférieure à 10 nm et ladite taille moyenne de particules desdites particules d'oxyde de cérium, $CeO_2$, en suspension étant inférieure à 500 nm, telle qu'inférieure à 300 nm, de préférence inférieure à 200 nm, de plus grande préférence inférieure à 150 nm et idéalement la taille moyenne de particules étant inférieure à 100 nm et ladite concentration desdites particules d'oxyde de cérium, $CeO_2$, dans ladite première composition fluide de nettoyage étant comprise dans la plage allant de 0,3 à 20 % p/p, telle que dans la plage allant de 0,5 à 15 % p/p, de préférence dans la plage allant de 1 à 10 % p/p et idéalement dans la plage allant de 2 à 5 % p/p, et
   - ladite première composition fluide de nettoyage possédant un potentiel zêta supérieur à 30 mV, de préférence supérieur à 40 mV, de préférence supérieur à 50 mV et idéalement supérieur à 60 mV,
   - ladite valeur de pH de ladite première composition fluide de nettoyage étant de préférence dans la plage allant de 3,0 à 5,0, telle que dans la plage allant de 4,0 à 5,0 et ladite première composition fluide de nettoyage comprenant en outre un tampon pour maintenir ladite composition de nettoyage dans une plage de pH spécifique et ledit tampon comprenant de l'acide acétique et/ou de l'acide citrique et/ou de l'acide nitrique.

7. Composition fluide de nettoyage selon la revendication 6, lesdites particules d'oxyde de cérium, $CeO_2$, possédant une taille moyenne de particules supérieure ou égale à 20 nm.

8. Utilisation d'une composition fluide de nettoyage selon la revendication 6 ou 7 pour nettoyer du verre tel que des fenêtres et/ou des vitres et/ou des miroirs et/ou des lentilles et/ou des carreaux tels que des carreaux dans une salle de bain et rendre de telles surfaces propres et hydrophiles avec un angle de contact pour de l'eau sur de telles surfaces inférieur à 15°.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9707069 A
- US 2002016250 A1, Hayakawa
- WO 97097069 A, Heller
- EP 1773729 B1
- EP 1773729 A
- EP 0987317 A1
- JP 2005048125 A

### Non-patent literature cited in the description

- **FUJISHIMA et al.** *J. of Photochemistry and photobiology C: Reviews,* 2000, vol. 1, 1-21